# EUROPÄISCHE PATENTSCHRIFT

(11) **EP 3 673 635 B1**
(45) Veröffentlichungstag und Bekanntmachung des Hinweises auf die Patenterteilung: **04.10.2023**
(21) Anmeldenummer: 18759620.0
(22) Anmeldetag: 24.08.2018
(51) Int. Cl.: H04L 9/40, F16K 37/00, H04W 12/65

(54) **KOMMUNIKATIONSVERFAHREN FÜR EIN STELLGERÄT**
COMMUNICATION METHOD FOR AN ACTUATOR
PROCÉDÉ DE COMMUNICATION POUR UN APPAREIL DE RÉGLAGE

(30) Priorität: 24.08.2017 DE 102017119406
(43) Veröffentlichungstag der Anmeldung: 01.07.2020
(73) Patentinhaber: Samson Aktiengesellschaft, 60314 Frankfurt am Main (DE)
(72) Erfinder: WIDL, Andreas, 81675 München (DE)
(74) Vertreter: Schmid, Nils T.F.
(86) Internationale Anmeldenummer: PCT/EP2018/072897
(87) Internationale Veröffentlichungsnummer: WO 2019/038429

(56) Entgegenhaltungen:
- EP-A2- 2 698 570
- WO-A1-03/091614
- US-A1- 2003 120 925
- US-A1- 2005 011 278
- US-A1- 2011 103 581

## Beschreibung

Die Erfindung betrifft ein Kommunikationsverfahren für ein Stellgerät einer prozesstechnischen Anlage, wie einer chemischen Anlage, einer Lebensmittel verarbeitenden Anlage, eines Kraftwerks oder dergleichen. Ein Stellgerät hat beispielsweise zumindest ein Stellventil, wie ein Notschließventil oder ein Regelungsventil, durch das eine Mediumströmung, insbesondere eine Fluidströmung, der prozesstechnischen Anlage gesteuert und eingestellt werden kann. Das Stellgerät kann mit Hilfsenergie, wie pneumatischer Hilfsenergie, betrieben werden, wobei insbesondere ein vorzugsweise pneumatischer Stellantrieb über einen insbesondere elektropneumatischen Stellungsregler betätigt werden kann. Das Stellgerät kann alternativ oder zusätzlich eine Pumpe umfassen.

Bei Stellgeräten, wie Stellventilen und/oder Pumpen, welche eine Prozessmediumströmung einer prozesstechnischen Anlage beeinflussen, insbesondere steuern und/oder regeln, können verschleißbedingte Schäden auftreten. Eine Prozessfluidströmung mit einem hohen Festkörperanteil kann zu verstärktem Verschleiß an dem Stellventil führen. Insbesondere Betriebsphänomene, wie Korrosion, Abrasion, Kavitation oder Flashing, können zu einem verstärkten Verschleiß des Stellventils und/oder der Pumpe führen. Durch Verschleiß kann es beispielsweise zu Leckage kommen. Die Leckage kann zu einem Produktverlust und/oder einem weniger effizienten Prozess, möglicherweise sogar zu einem Sicherheitsrisiko für die gesamte Anlage führen. Die Überwachung von Leckage und anderen Verschleißerscheinung während des Betriebs einer prozesstechnischen Anlage hat daher eine große Bedeutung für die Funktionsfähigkeit und die Verlässlichkeit des Stellgeräts in der prozesstechnischen Anlage.

Von DE 10 2012 016 295 A1 ist ein Verfahren zur Quantifizierung eines verschleißbedingten Leckagedurchflusses an einem Stellventil einer prozesstechnischen Anlage bekannt. Dazu werden zunächst mit Hilfe eines Körperschall-Mikrofons an dem Stellventil Erfahrungsdaten an einem intakt arbeitenden Referenz-Stellventil erfasst, das entweder dem relevanten Stellventil im Neuzustand entspricht oder die gleiche Bauweise hat. Die erfassten Referenzwerte umfassen eine Reihe von Referenz-Durchflusswerten bei mehreren unterschiedlichen geringfügigen Öffnungszuständen des Stellventils, sowie je eine einem Referenz-Durchflusswert zugeordnete Referenz-Körperschallmessung. Während des Betriebs der prozesstechnischen Anlage wird an dem Stellventil in geschlossenem Zustand erneut ein Momentan-Körperschall gemessen. Dieser Momentan-Körperschall wird anschließend mit den hinterlegten Referenz-Körperschallwerten verglichen, auf deren Basis ein Momentan-Durchflusswert abgeschätzt wird, der dem dem zugeordneten Referenz-Körperschallwert entsprechenden Referenz-Durchflusswert entspricht. Der so abgeschätzte Momentan-Durchflusswert bildet die an dem Stellventil vorhandenen Leckageströmung ab. Durch Überwachung der Momentan-Körperschallwerte bzw. der Momentan-Leckagedurchflusswerte kann der Zustand des Stellventils sicher eingeschätzt werden und bei drohender kritischer Verschlechterung des Zustands des Stellventils vorbeugende Wartungsmaßnahmen ergriffen werden.

Ein anderes Diagnosesystem und -verfahren, insbesondere für ein Ventil, wird von EP 1 216 375 B2 beschrieben. Demnach wird davon ausgegangen, dass Fehlergeräusche in Gasen überwiegend durch Ultraschallströmungen, in Flüssigkeiten überwiegend durch Kavitation entstehen. Ultraschallströmung entsteht schon bei kleinsten Lecks und hat an Kanten und Verengungen Verdichtungsstöße und Verdünnungswellen in gasförmigen Medien zur Folge. Verdichtungsstöße mit spontanen, extrem schnellen Wechseln zwischen Überschall- und Unterschallströmungen im Gas führen zu energiereichen, breitbandigen Ultraschallemissionen, deren Spektralfrequenzen vergleichbar sind mit denen von Kavitation in Flüssigkeiten. Als Kavitation wird die Bildung und nachfolgende Kondensation von Dampfblasen in strömender Flüssigkeit infolge von Geschwindigkeitsänderungen bezeichnet. Kavitation entsteht, wenn bei Beschleunigung einer Strömung der Druck örtlich unter den Dampfdruck der Flüssigkeit absinkt, so dass sich Dampfblasen bilden, die bei darauffolgenden Verzögerungen durch steigenden statischen Druck über den Dampfdruck wieder kondensieren. Infolge der plötzlichen Volumenänderungen kollabieren die Dampfblasen bei Kavitation schlagartig, was mit starken Druckstößen in der Flüssigkeit einhergeht. Dabei entstehen Schallsignale mit einer spektralen Verteilung ähnlich eines weißen Rauschens, so dass bis in hohe Frequenzbereiche Signale feststellbar sind. Eine Verstärkung der Kavitation und zunehmendes Kavitationsrauschen ist als deutliches Anzeichen für Leckageströmungen zu werten. Zur Erfassung der Kavitationsgeräusche schlägt EP 1 216 375 B2 vor, mit Hilfe eines piezoelektrischen Körperschallsensors gemessene Körperschallwerte oberhalb einer Frequenz von 50 kHz auszuwerten. Um von der Fluid- beziehungsweise Medienart unabhängige Ultraschallgeräusche zu erfassen, soll ein Frequenzbereich oberhalb 100 kHz gemessen werden. Im Spektralbereich oberhalb von 200 kHz soll Amplitudenverhältnisse aufeinanderfolgender Spektralbereiche in beiden Fällen einander wesentlich ähnlicher sein als in niedrigeren Spektralbereichen. In dem Spektralbereich oberhalb von 200 kHz sollen zudem relativ kleine Amplituden hochfrequenter Spektraleinheiten von Ultraschallfehlergeräuschen benachbarter Geräuschquellen, welche durch Übertragungsmedien oder Verbindungen an das relevante Stellventil übertragen werden, gedämpft sein. Insbesondere eine Filterung bei einer Grenze von mindestens 500 kHz soll bewirken, dass praktisch nur durch das überwachte Ventil erzeugtes Schallsignal ausgewertet werden. Auf diese Weise soll eine ventil- und medienabhängige Einstellung der Grenzfrequenz gewährleistet werden, um eine Unterscheidung zwischen Grundrauschen und Kavitationsrauschen zu ermöglichen. Gemäß EP 1 216 375 B2 kann durch die Wahl geeigneter Grenzfrequenzen ein Messergebnis generiert werden, das weitgehend unabhängig vom Grundrauschen ist, welches abhängig vom Medium, der Ventilumgebung und den Eigenschaften des Ventils stark variieren soll. Zur Ermittlung des Schwellwerts soll beispielsweise die Stärke des Grundrauschens im Neuzustand des Ventils berücksichtigt und eine darüber liegende Grenzfrequenz gewählt werden. Zur Kommunikation des Ventilzustands von dem Stellventil an eine zentrale, beispielsweise über eine Feldbus-Verbindung angekoppelte, Recheneinheit schlägt EP 1 216 375 B2 vor, unterschiedliche Leitungen für die Meldung der Zustände "Ventilfehler", "Fehlertrend" und "Ventil-Gut" zu verwenden.

Eine weitere Diagnoseeinrichtung für ein Feldgerät im industriellen Umfeld einer verfahrenstechnischen Anlage beschreibt WO 02/077733 A1. Demnach erfolgt die Kommunikation zwischen einer zentralen Steuerung und einzelnen Feldgeräten über ein genormtes Datenaustauschprotokoll. Zur Erfassung des physischen Zustands werden die Feldgeräte einer regelmäßigen Kontrolle durch Inaugenscheinnahme unterzogen, um Beschädigungen zu erkennen und, insbesondere bei Aktoren, deren Verschleißzustand zu ermitteln. Das von WO 02/077733 A1 beschriebene Feldgerät ist mit einer akustischen Datenerfassungseinrichtung ausgestattet, die kontinuierlich akustische Information über den Zustand des Feldgeräts gewinnt. So sollen Prozessgrößen anhand charakteristischer Geräusche während des Betriebs verifizierbar sein. Geräusche, die für den Verschleißzustand charakteristisch sind, erzeugt gemäß WO 02/077733 A1 beispielsweise bei fortgeschrittenem Verschleiß des Stellantriebs die Hubstangenbewegung. So soll je nach Art und Intensität der Geräusche auf den Verschleißzustand des Stellantriebs geschlossen werden. Die auftretenden Geräusche sollen mit einem Mikrofon in elektrische Toninformation umgesetzt werden. Mit einer zentralen Datensammeleinrichtung soll die akustische Datenerfassungseinrichtung des Mikrofons über einen separaten Datenpfad verbunden sein, beispielsweise drahtlos und/oder über das Internet. Die Datensammeleinrichtung soll die gemessene Toninformation auswerten, um aus dem Geräusch eine Durchflussmenge an dem Ventil zu bestimmen. Bei deutlicher Abweichung zwischen der akustisch gemessenen Durchflussmenge und der Soll-Durchflussmenge soll durch diese Datensammeleinrichtung auf einen Defekt an dem Durchflussmessgerät geschlossen werden. EP1499825, EP2698570 und US2005011278 beschreiben weitere Stand der Technik Verfahren.

Für eine verlässliche Diagnose eines Stellventils ist es erforderlich, dass eine Diagnosevorrichtung, wie eine zentrale Recheneinheit, die Diagnose auf Basis korrekter Daten vornimmt. Dabei ist zum einen sicherzustellen, dass die an dem Stellgerät erfassten Messdaten inhaltlich unverfälscht der Diagnoseeinrichtung bereitgestellt werden. Dabei sind Übertragungsfehler auszuschließen. Ferner ist grundsätzlich sicherzustellen, dass die von der Diagnoseeinrichtung durchgeführte Diagnose auf Basis von Werten durchgeführt wird, die tatsächlich von dem zu diagnostizierenden Stellgerät stammen. Bei der Übertragung über lange, komplex aufgebaute Feldbus-Netzwerkstrukturen wie auch bei der Übertragung auf kabellosem Übertragungsweg, ebenso wie bei der Übertragung über das Internet, besteht stets das Risiko, dass bei der Datenübertragung von dem Stellgerät an die Diagnoseeinrichtung, sei es durch Übertragungsfehler oder durch mutwillige Eingriffe in die Datenkommunikation, unzutreffende Werte von der Diagnoseeinrichtung empfangen werden. Wenn die Diagnoseeinrichtung auf der Grundlage von verfälschten Werten eine Diagnose durchführt, besteht einerseits das Risiko, dass falsch-positive Diagnoseergebnisse (Fehlalarm) auftreten. Falls hierbei kritische Fehlermeldungen auftreten, muss eine manuelle Überprüfung des Stellgeräts erfolgen, was oftmals einen Stillstand der Anlage erfordern kann, wodurch erhebliche finanzielle Schäden auftreten können. Noch problematischer ist es, wenn die Diagnoseeinrichtung aufgrund verfälschter Messwerte ein falsch-negatives Diagnoseergebnis generiert, also einen vermeintlich fehlerfreien Stellgerätezustand diagnostiziert, obgleich an dem zu diagnostizierenden Stellgerät in der Realität ein möglicherweise sogar kritischer Fehlerzustand auftritt, der durch die Diagnostiziereinrichtung unerkannt bleibt. Ein unerkannter kritischer Fehlerzustand kann erhebliche Schäden der prozesstechnischen Anlage, schlimmstenfalls sogar Personen- und Umweltschäden zur Folge haben.

Es ist eine Aufgabe der Erfindung, die Nachteile des Standes der Technik zu überwinden, insbesondere ein Kommunikationsverfahren für ein Stellgerät einer prozesstechnischen Anlage bereitzustellen, das eine zuverlässige, sicherere und/oder fehlerfreie Kommunikation vorzugsweise von akustischen Messwerten des Stellgeräts beispielsweise an eine Diagnoseeinrichtung der prozesstechnischen Anlage erlaubt.

Diese Aufgabe wird durch die Merkmale von Anspruch 1 gelöst. Danach ist ein Kommunikationsverfahren für ein Stellgerät, wie ein Stellventil, eine Pumpe oder dergleichen, einer prozesstechnischen Anlage, wie eine chemische Anlage, eine Lebensmittel verarbeitende Anlage, ein Kraftwerk oder dergleichen, vorgesehen. Gemäß dem erfindungsgemäßen Kommunikationsverfahren werden von dem Stellgerät akustische Emissionen erzeugt. Die akustischen Emissionen des Stellgeräts können beispielsweise Emissionen entsprechend der Eigenschwingungsfrequenzen des Stellgerätes sein. Die erzeugten akustischen Emissionen des Stellgeräts liegen vorzugsweise zumindest teilweise oberhalb des hörbaren Bereichs. Insbesondere können Emissionen mit einer Frequenz von wenigstens 15 kHz, insbesondere wenigstens 20 kHz, vorzugsweise wenigstens 30 kHz abgegeben werden. Gemäß einer bevorzugten Ausführung werden von dem Stellgerät akustische Emissionen im Bereich zwischen 30 kHz und 50 kHz abgegeben. Gegebenenfalls können auch Emissionen im Bereich größer als 50 kHz abgegeben werden. Die von dem Stellgerät abgegebenen Emissionen können vorzugsweise infolge des betriebsgemäßen Gebrauchs des Stellgeräts abgegeben werden.

Bei dem erfindungsgemäßen Kommunikationsverfahren werden die akustischen Emissionen des Stellgeräts erfasst. Die Erfassung der akustischen Emissionen des Stellgeräts erfolgt vorzugsweise zumindest teilweise im Frequenzbereich oberhalb des hörbaren Bereichs. Vorzugsweise werden für das erfindungsgemäße Kommunikationsverfahren insbesondere nur Frequenzen von wenigstens 15 kHz, vorzugsweise 20 kHz, besonders bevorzugt wenigstens 30 kHz erfasst. Die für das Kommunikationsverfahren erfassten akustischen Emissionen des Stellgeräts können in dem Frequenzbereich von nicht mehr als 500 kHz, vorzugsweise nicht mehr als 300 kHz, insbesondere nicht mehr als 200 kHz liegen. Bevorzugt wird der Bereich bis 200 kHz oder bis 100 kHz für das erfindungsgemäße Kommunikationsverfahren erfasst. Gemäß einer besonders bevorzugten Ausführung wird der Frequenzbereich zwischen 20 kHz und 100 kHz, insbesondere zwischen 30 kHz und 50 kHz insbesondere ausschließlich für das Kommunikationsverfahren erfasst.

Ferner wird bei dem erfindungsgemäßen Kommunikationsverfahren eine stellgeräteindividuelle Kennung, wie ein akustischer Fingerabdruck, definiert, wobei das Definieren der Kennung auf Basis der erfassten akustischen Emissionen erfolgt. Vorzugsweise erfolgt das Definieren der Kennung auf Basis von ausschließlich in dem oben genannten Messbereich von beispielsweise zwischen 20 kHz und 500 kHz, insbesondere zwischen 30 kHz und 50 kHz erfassten Messwerte. Überraschenderweise hat sich entgegen bestehender Vorurteile herausgestellt, dass sich charakteristische akustische Emissionen identifizieren lassen, die als stellgeräteindividueller akustischer Fingerabdruck bezeichnet werden können, welche als Grundlage einer einem einzigen individuellen Stellgerät zugeordneten Kennung tauglich sind. Während beispielsweise DE 10 2012 016 295 A1 beschreibt, dass ein Referenz-Körperschall eines bestimmten, individuellen Stellgeräts praktisch identisch zu akustischen Referenz-Körperschallsignalen eines anderen Stellgeräts gleicher Bauweise ist, konnten die Erfinder herausfinden, dass insbesondere in dem nicht hörbaren Bereich, vorzugsweise im Ultraschallbereich derart einzigartige akustische Emissionen reproduzierbar erfasst werden können, welche einem einzigen Stellgerät eindeutig zugeordnet werden können und dieses von jedem anderen Stellgerät, auch baugleichen Stellgeräten, unterscheidbar macht.

Als besonders gut geeignet zur Erfassung von akustischen Emissionen als Grundlage einer stellgeräteindividuellen Kennung hat sich ein Diagnosesystem mit optischem Mikrofon erwiesen, das insbesondere auf ein Strukturelement, wie ein Innenorgan oder die Außenseite, des Stellgeräts ausgerichtet ist und ein akustisches, stellgerätspezifisches Betriebssignal oder Betriebsgeräusch, wie Leckageschall, Kavitationsschall, mittels elektromagnetischer Strahlung, wie Licht, misst, die durch das akustische, stellgerätspezifische Betriebssignal beeinflusst ist. Dabei nutzt das optische Mikrofon die sich aufgrund von Schall, nämlich Schalldruckwellen, ergebende Änderungen der elektromagnetischen Strahlung an einer mikrofonspezifischen Ausrichtstelle. Das optische Mikrofon kann ein von dem akustischen Betriebssignal abhängiges, elektrisches Messsignal erzeugen. Des Weiteren hat das optionale Diagnosesystem eine elektronische Diagnoseeinrichtung, welche das elektrische Messsignal des optischen Mikrofons empfängt und insbesondere anschließend speichert, verarbeitet und/oder weiterleitet, insbesondere an eine stellgerätspezifische Elektronikeinheit, wie einen Mikrorechner, beispielsweise eines Stellungsreglers, oder an eine mit dem Stellgerät verbundene Leitwarte der prozesstechnischen Anlage.

Das optionale Diagnosesystem bedient sich an einem optischen Mikrofon, das entweder vorhandene elektromagnetische Strahlung, insbesondere deren sichtbaren Teil (380 nm bis 780 nm, Umgebungslicht) nutzt oder eine künstliche, mikrofoneigene Lichtquelle aufweist, welche beispielsweise als Laserdiode realisiert sein kann. Die Lichtquelle kooperiert vorzugsweise mit einem Messkopf, der beispielsweise als interferometrischer Spiegel ausgebildet sein kann. Der Messkopf kann relativ zur Lichtquelle beweglich gelagert sein, wobei auch die Lichtquelle beweglich gelagert sein kann. Insbesondere sind beide Lichtquellen ortsfest zueinander angeordnet. Bei einer bevorzugten Ausführung der Erfindung sind der Messkopf und die Lichtquelle des optischen Mikrofons über einen insbesondere verformbaren Lichtwellenleiter vorzugsweise flexibel miteinander gekoppelt, so dass eine Relativbewegung zwischen Messkopf und Lichtquelle zugelassen wird, ohne dass die optische Lichtwellenführung zwischen Messkopf und Lichtquelle beeinträchtigt ist. Auf diese Weise kann bei Einsatz einer empfindlichen Laserdiode, diese in einem geschützten Bereich, beispielsweise in einem Gehäuse, getrennt von dem Messkopf und/oder der Ausrichtstelle angeordnet sein, um nicht rauen Umgebungsbedingungen am oder im Stellgerät ausgesetzt zu sein.

Der durch das akustische, stellgerätspezifische Betriebssignal erzeugte Schalldruck, insbesondere dessen Änderung, lässt sich über die Änderung des Brechungsindex in der Luft optisch erfassen, welche durch Schallwellen hervorgerufen wird. Die akustischen, stellgerätspezifischen Betriebssignale sind typische Betriebsgeräusche, die von dem Stellgerät an bestimmten Stellen des Stellgeräts mit höherer Intensität abgegeben werden. Diese Stellen höherer Geräuschintensität sind häufig für eine Erfassung schwer zugänglich, allerdings mit dem optionalen optischen Mikrofon abtastbar. Beispielsweise kann der Leckageschall oder Kavitationsschall insbesondere in der Nähe des Schließglieds des Stellventils mit hoher Intensität aufgenommen werden, was eine Anordnung des Aufnehmers in dem Prozessmedium erfordert, was eben durch ein optisches Mikrofon erreicht werden kann. Für die Diagnose können Referenzwerte, wie Erfahrungswerte, für Betriebsgeräusche gespeichert sein oder im Rahmen eines Initialisierungsprozesses für das jeweilige Stellgerät spezifisch aufgenommen werden, um für jedes Stellgerät individuell einen spezifischen Geräuschfingerabdruck als Vergleichsreferenz vorzuweisen. Ein Leckageschall kann beispielsweise dadurch stellgerätspezifisch aufgenommen sein, dass das intakte Stellgerät entsprechend einem üblichen Leckageverschleißdurchlass geöffnet wird, wodurch sich typische Durchflussgeräusche einstellen, die stellgerätespezifisch gespeichert werden.

Eine möglichst präzise Umwandlung des akustischen Betriebssignals oder Betriebsgeräusches in elektrische Messsignale wird durch das optionale optische Mikrofon erreicht, von dem entweder die Veränderlichkeit des Umgebungslichts wegen der Schalldruckschwankungen erfasst wird oder die Lichtgeschwindigkeitsänderung eines Lichtstrahls einer mikrofoneigenen Lichtquelle, wie eines Laserstrahls, der das Schallfeld durchquert, erfasst wird. Die Änderung der Lichtgeschwindigkeit ist proportional zum Schalldruck. Beispielsweise kann eine Interferenzanordnung herangezogen werden, indem Änderungen der Lichtgeschwindigkeit in einem schallfreien Luftfeld mit denen des mit dem Betriebsgeräusch durchsetzten Schallfeld verglichen werden. Dazu kann das optische Mikrofon beispielsweise zwei Laserstrahlquellen aufweisen, die den gleich langen Weg zurücklegen, wobei das eine Strahldurchquerungsfeld von dem akustischen, stellgerätspezifischen Betriebssignal unbeeinflusst ist, während das Schallfeld von diesem durchsetzt wird. Zum Erfassen der interferierenden Laserstrahlen ist ein Detektor vorgesehen, der die gemessene Interferenz als elektrisches Messsignal ausgibt.

Bei einer Ausführung mit dem optionalen Diagnosesystem hat das optische Mikrofon einen ersten Interferometer und einen zweiten Interferometer, die jeweils Licht von ein und derselben Lichtquelle empfangen können. Durch die Verwendung mehrerer Interferometer wird eine sehr aussagekräftige räumliche Auflösung des Schallfelds erreicht. Jedes Interferometer kann für sich über einen Strahlteiler verfügen, der den Licht- oder Laserstrahl auf zwei unterschiedliche, aber gleich lange Wege schickt. Der eine Teilstrahl ist dem Schallfeld ausgesetzt, der andere ist akustisch isoliert. Beide Teilstrahlen werden, nachdem sie in der Regel mehrfach an Spiegeln reflektiert wurden, wieder zusammengeführt und interferieren miteinander. Das jeweilige Interferometer kann ein Fabry-Perot-Interferometer sein.

Für die Erzeugung des von dem akustischen, stellgerätspezifischen Betriebssignal abhängigen, elektrischen Messsignals kann das optionale optische Mikrofon einen entsprechenden Wandler umfassen, der ein oder mehrere Interferometer insbesondere mit einem ortsfesten, insbesondere beweglichen Spiegel umfasst. Beispielsweise können ein oder mehrere Strahlungsdetektoren vorgesehen sein, die dazu ausgelegt sind, die durch die Schallwellen beeinflusste elektromagnetische Strahlung zu erfassen und die erfasste, beeinflusste elektromagnetische Strahlung in das magnetische Messsignal umzuwandeln.

Bei einer Ausführung mit dem optionalen Diagnosesystem ist das optische Mikrofon membranlos ausgeführt und bedarf daher keiner beweglichen Bauteile, wodurch eine äußerst präzise Kennung des akustischen, stellgerätspezifischen Betriebssignals erreicht wird. Das optische Mikrofon ist dazu ausgeführt, schalldruckoptisch die Erfassung der Änderung des Brechungsindex der Luft im Verlauf der Schallwellen des akustischen, stellgerätspezifischen Betriebssignals zu erfassen.

Bei einer Ausführung mit dem optionalen Diagnosesystem ist das optische Mikrofon im Inneren eines Gehäuses des Stellgeräts, wie des Ventilgehäuses des Stellventils, angeordnet, wobei das Innere des Gehäuses von Prozessmedium durchströmt wird, wobei insbesondere das optische Mikrofon auf ein Ventilschließglied, einen Ventilsitz und/oder eine Ventilstange des Stellventils ausgerichtet ist. Alternativ oder zusätzlich kann ein insbesondere weiteres optisches Mikrofon in einer Prozessmedium bzw. - fluid führenden Rohrleitung der prozesstechnischen Anlage insbesondere benachbart dem Stellgerät angeordnet sein, wobei insbesondere das optische Mikrofon in das Innere des Gehäuses des Stellgeräts ausgerichtet ist. Alternativ oder zusätzlich kann das optische Mikrofon in einer pneumatischen Leitung eines pneumatischen Stellantriebsystems des Stellgeräts angeordnet sein, wobei insbesondere das optische Mikrofon auf ein Magnetventil insbesondere eines Stellungsreglers des Stellgeräts ausgerichtet sein kann. Alternativ oder zusätzlich kann das optische Mikrofon in einer pneumatischen Arbeitskammer eines pneumatischen Stellantriebs des Stellgeräts angeordnet sein, wobei insbesondere das optische Mikrofon auf eine Membran oder einen Balg des Stellantriebs ausgerichtet sein kann, die/der zwei Arbeitskammern des Stellantriebs voneinander trennt. Alternativ oder zusätzlich kann das optische Mikrofon auch außerhalb des Stellgeräts, insbesondere des Stellgerätgehäuses, angeordnet sein, beispielsweise an dem das Stellventil mit einem Stellantrieb verbindenden Joch oder Laterne, einem Verbindungsflansch beispielsweise eines Stellantriebs und des Stellventils beispielsweise eines Gehäuses des Stellantriebs, an der Antriebsstange des Stellantriebs selbst, in der Nähe des Stellungsreglers. Im Fall der Anordnung in einer Rohrleitung kann das optische Mikrofon an einem Strömungsteiler angeordnet sein, an dem spezifische Betriebsgeräusche zu erwarten sind. Eine weitere alternative oder zusätzliche Positionierung eines optischen Mikrofons kann am Verbindungsschraubbolzen realisiert sein, der beispielsweise als Schallbrücke zwischen dem Ventilgehäuse und dem Joch fungiert. Ein besonders geeigneter Einsatz des optionalen optischen Mikrofons wird dadurch erreicht, dass das optische Mikrofon in der Strömung des Prozessfluids selbst angeordnet ist.

Bei einer Ausführung mit dem optionalen Diagnosesystem umfasst das Diagnosesystem zusätzlich einen piezoelektrischen Körperschallsensor oder einen Schallsensor mit einer die Schallwellen aufnehmenden Membran, wobei die Messdaten des Körperschallsensors oder des Schallsensors der Diagnoseeinrichtung übergeben ist, um insbesondere die Verarbeitung des von dem optischen Mikrofon erzeugten Messsignals zu bewerten. Auf diese Weise kann die Präzision der Erfassung von akustischen Betriebssignalen des Stellgeräts erhöht werden.

Bei einer Ausführung mit dem optionalen Diagnosesystem ist vorgesehen, dass das optische Mikrofon eine Lichtquelle, wie eine Laserdiode, sowie einen Messkopf umfasst, welche über einen insbesondere flexiblen Lichtwellenleiter, wie ein Glasfaserkabel, derart miteinander gekoppelt sind, dass die Lichtquelle und der Messkopf zueinander beweglich gehalten werden können, wobei insbesondere der Messkopf zumindest einen Lichtteiler aufweist, um einen ersten Lichtstrahl, der den Schallwellen des akustischen Betriebssignals ausgesetzt ist, und einen zweiten Lichtstrahl zu erzeugen, der einem von den Schallwellen geschützten Weg zumindest teilweise folgt.

Gemäß einer bevorzugten Ausführung eines erfindungsgemäßen Kommunikationsverfahrens umfasst das Erfassen der akustischen Emissionen, dass eine zeitabhängige Schar von Emissionsmesswerten, wie ein insbesondere Fourier-transformiertes Frequenzspektrum oder eine Reihe von Zeit-Emissionswert-Paaren, bestimmt wird. Eine zeitabhängige Schar von Emissionsmesswerten des Stellgeräts kann als Schallbild bezeichnet sein, das über einen definierten Zeitraum beispielsweise mittels eines an einer vorbestimmten Stelle angebrachten Mikrofons, wie dem optionalen optischen Mikrofon, aufgenommen werden kann. Dabei wird das akustische Signal in ein elektrisches Signal gewandelt und in einer Datenverarbeitungseinheit in ein Bitmuster überführt. In der Datenverarbeitungseinheit, die beispielsweise an dem Stellgerät, insbesondere an dem Stellventil und an der Pumpe, oder für die Dauer der Schallbild-Aufnahme extern an der Außenseite des Gehäuses des Stellgeräts, insbesondere des Stellventils oder der Pumpe, angeordnet sein kann, wird die stellgeräteindividuelle Kennung definiert.

Gemäß einer bevorzugten Ausführung eines erfindungsgemäßen Kommunikationsverfahrens wird wenigstens eine Filterfunktion durchgeführt, um aus den erfassten akustischen Emissionen unter Herausfiltern von Einflüssen durch Umgebungsgeräusche, alterungsbedingte Geräusche und/oder Fehlergeräusche stabile stellgeräteindividuelle Schallparameter zu bestimmen. Stellgeräteindividuelle stabile Schallparameter können beispielsweise in Form eines Schallbilds bzw. Frequenzmusters generiert werden, welches nicht durch Alterungsprozesse, Fehlergeräusche oder Umgebungsgeräusche beeinflusst sind. Eine Filterung hinsichtlich Umgebungsgeräuschen kann beispielsweise erfolgen durch eine Subtraktion oder andere Filterfunktionen unter Berücksichtigung durch ein anderes Mikrofon insbesondere gleichzeitig gemessener Schallemissionen oder anhand von zu unterschiedlichen, insbesondere vorbestimmten Zeitpunkten erfasste Messwerte durch ein einziges Mikrofon, wobei es vorzugsweise dasselbe Mikrofon ist, das die charakteristischen akustischen Emissionen zur Definition der stellgeräteindividuellen Kennung erfasst. Das Herausfiltern von alterungsbedingten Schallemissionen kann beispielsweise auf ähnlichem Wege erfolgen, indem anhand von Erfahrungswerten, beispielsweise in insbesondere regelmäßigen Abständen zu unterschiedlichen Zeitpunkten gemessene Schallemissionen im Hinblick auf alterungsbedingte Trends oder dergleichen analysiert werden, anhand derer bei der Messung zur Erfassung der charakteristischen Schallemissionen für die Definierung der Kennung bestimmt wird, welcher Teil der Emission alterungsbedingt und folglich hinsichtlich einer stellgeräteindividuellen Kennung irrelevant ist. Die Erkennung von Fehlergeräuschen ist beispielsweise für Kavitationsfehlergeräusche gemäß den oben genannten Druckschriften bekannt. Schallemissionen, welche sich auf übliche Fehlerquellen zurückführen lassen, können insofern berücksichtigt und herausgefiltert werden, um stellgeräteindividuelle stabile Schallparameter für die Definierung der stellgeräteindividuellen Kennung zu bestimmen.

Gemäß einer bevorzugten Ausführung eines erfindungsgemäßen Kommunikationsverfahrens, umfasst das Definieren der Kennung das Erzeugen eines privaten Schlüssels auf Basis der erfassten akustischen Emissionen. Stellgeräteindividuelle akustische Emissionen, insbesondere im nichthörbaren Bereich, lassen sich praktisch nur durch physikalischen Zugriff auf das relevante Stellgerät aus der unmittelbaren Umgebung des Stellgeräts generieren. Derartige Messwerte sind also einerseits einzigartig dem individuellen Stellgerät zugeordnet und andererseits sicher von dem Zugriff von außerhalb der prozesstechnischen Anlage geschützt; sie eignen sich daher besonders gut zur Definierung eines privaten Schlüssels für ein erfindungsgemäßes Kommunikationsverfahren. Eine derartiger privater Schlüssel kann beispielsweise zur Kommunikation mit einem kryptografischen Verfahren, wie dem RSA-Verfahren und/oder als Grundlage des Diffie-Hellman-Schlüsselaustausch (kurz: DHM-Schlüsselaustausch), verwendet werden. Bevorzugt kann der private Schlüssel auf Basis stabiler stellgeräteindividueller Schallparameter erzeugt werden. Es ist aber auch denkbar, einen privaten Schlüssel anhand von akustischen Emissionen zu erzeugen, die auf (herausgefilterten) instabilen erfassten akustischen Emissionen basieren. Alternativ oder zusätzlich kann ein zufälliger Messwert betreffend akustischer Emissionen, beispielsweise zu einem zufälligen Messzeitpunkt, betreffend einer zufälligen Frequenz und/oder einem zufälligen Frequenzbereich, betreffend einer zufälligen Messzeit, Kombination davon oder dergleichen, generiert werden. Auf Basis einer zufälligen Entscheidungsgrundlage, die möglicherweise auf mehreren Zufallsparametern basiert, und einen schwer reproduzierbaren Rausch-Messwert betrifft, kann zur Generierung eines besonders sicheren privaten Schlüssels verwendet werden.

Gemäß einer Weiterbildung des erfindungsgemäßen Kommunikationsverfahrens umfasst das Definieren der Kennung ferner das Erzeugen einer digitalen Signatur zum Identifizieren des Stellgeräts auf Basis des privaten Schlüssels. Eine digitale Signatur kann beispielsweise bei der Kommunikation von Messwerten, insbesondere zur Diagnose des Stellgeräts, von dem Stellgerät an eine Rechnereinheit der prozesstechnischen Anlage dazu dienen, die übersandten Daten eindeutig als von dem Stellgerät stammend identifizieren zu können.

Gemäß einer anderen Weiterbildung eines erfindungsgemäßen Kommunikationsverfahrens, das mit der vorherigen Ausführung kombinierbar ist, umfasst das Kommunikationsverfahren ferner das Erzeugen eines öffentlichen Schlüssels auf Basis des privaten Schlüssels. Bevorzugt kann sowohl eine digitale Signatur als auch ein öffentlicher Schlüssel auf Basis des privaten Schlüssels erzeugt werden. Die Erzeugung des privaten Schlüssels, der digitalen Signatur und/oder des öffentlichen Schlüssels erfolgt vorzugsweise durch eine insbesondere geschützte Hardware des Stellgeräts. So kann, beispielsweise gemäß dem RSA-Kommunikationsverfahren, einem entfernen Nutzer, wie einer Rechnereinheit oder einer Leitwarte der prozesstechnischen Anlage oder einem anderen Nutzer, ein öffentlicher Schlüssel des Stellgeräts erzeugt und bereitgestellt werden, mit dessen Hilfe eine sichere Übertragung von Daten in verschlüsselter Form von dem Stellgerät an den entfernten Nutzer möglich ist. Eine besonders sichere Kommunikation kann gewährleistet werden, indem die Signale von dem Stellgerät an den entfernten Nutzer sowohl mit einer digitalen Signatur versehen als auch mit dem privaten Schlüssel des Stellgeräts verschlüsselt werden.

Gemäß einer Weiterbildung des erfindungsgemäßen Kommunikationsverfahrens umfasst dieses, dass der öffentliche Schlüssel des Stellgeräts an einen Kommunikationspartner, wie einen Nutzer, insbesondere mithilfe eines öffentlichen Datenspeichers, wie einem Zertifikatsserver oder einem Cloud-Speicher, übermittelt wird. So kann eine sichere Signalübertragung auch über ungesicherte Datenwege, wie das Internet oder eine Funkverbindung, erreicht werden. Es ist auch denkbar, innerhalb eines (eigentlich) geschlossenen Systems zu dessen zusätzlicher Absicherung verschlüsselt zu kommunizieren, ohne dass eine Signalübertragung von dem Stellgerät über das Internet oder dergleichen an den Kommunikationspartner erfolgt. Gemäß dieser Weiterbildung übermittelt insbesondere auch der Kommunikationspartner dem Stellgerät seinen öffentlichen Schlüssel, direkt oder indirekt, beispielsweise über den Zertifikatsserver oder den Cloud-Speicher. Durch Verwendung des privaten Schlüssels des Stellgeräts und des öffentlichen Schlüssels des Kommunikationspartners kann beispielweise eine RSA-Verschlüsselung oder eine andere vergleichbare Verschlüsselung der von dem Stellgerät an den Kommunikationspartner übermittelten Daten erfolgen.

Gemäß einer Weiterbildung des erfindungsgemäßen Kommunikationsverfahrens, das mit dem vorherigen kombinierbar ist, wird das Definieren der Kennung sowie gegebenenfalls das Erzeugen des öffentlichen Schlüssels insbesondere während des Betriebs des Stellungsreglers in Folge eines vorbestimmten Auslösers durchgeführt. Ein vorbestimmter Auslöser kann beispielsweise eine Aktivierung durch einen manuellen Nutzer unmittelbar an einem physikalischen Gehäuse des Stellungsreglers sein. Insbesondere kann der vorbestimmte Auslöser ein Zeitabstand, ein Zeitpunkt und/oder ein bestimmter Betriebszustand sein. Insbesondere nach einer Betriebsstörung kann, während der Initialisierung als vorbestimmter Betriebszustand, die Definierung der Kennung sowie gegebenenfalls das Erzeugen des öffentlichen Schlüssels erfolgen, um die Sicherheit des Verfahrens zu erhöhen. Dabei kann erneut ein neuer privater und/oder ein neuer öffentlicher Schlüssel insbesondere aus dem Schallbild erzeugt sowie gegebenenfalls verbreitet werden.

Gemäß einer bevorzugten Weiterbildung des erfindungsgemäßen Kommunikationsverfahrens, das mit den vorherigen kombinierbar ist, erzeugt das Stellgerät eine individualisierte Nachricht und versendet die individualisierte Nachricht an einen Kommunikationspartner. Eine individualisierte Nachricht von dem Stellgerät an einen Kommunikationspartner kann im Allgemeinen die stellgeräteindividuelle Kennung umfassen oder auf Basis der stellgeräteindividuelle Kennung individualisiert erzeugt sein. Vorzugsweise kann das Erzeugen einer individualisierten Nachricht von dem Stellgerät mittels des privaten Schlüssels des Stellgeräts, sowie gegebenenfalls dem öffentlichen Schlüssel des Kommunikationspartners, verschlüsselt und/oder mittels der digitalen Signatur des Stellgeräts signiert werden. Die Versendung einer Nachricht mithilfe einer digitalen Signatur kann ausreichend sein, um eine sichere Zuordnung von Messwerten in einer Nachricht einem bestimmten individuellen Stellgerät zuzuordnen. Auf diese Weise kann eine Fehlzuordnung von Messwerten eines Stellgerätes bezüglich eines anderen Stellgerätes und infolgedessen auftretende Diagnosefehler vermieden werden. Indem alternativ oder zusätzlich eine Verschlüsselung der Nachricht von dem Stellgerät an den Kommunikationspartner erfolgt, kann eine mutwillige Störung der Kommunikation von dem Stellgerät an den Kommunikationspartner, beispielsweise eine Leitwarte oder Diagnoseeinrichtung, unterbunden werden. Das Versenden der individualisierten Nachricht kann insofern auch über ungesicherte Signalpfade, beispielsweise durch das Internet, erfolgen. Ein Nutzen aus einer individuellen Kommunikation kann, wie oben beschrieben, auch dann gezogen werden, wenn in die Kommunikation innerhalb einer an sich geschlossenen Netzwerkes insbesondere ohne Berührung mit externen Netzwerken, wie dem Internet, erfolgen, indem zum einen Kommunikationsfehler vermieden werden und indem andererseits selbst bei unmittelbaren physikalischen Zugang von Hackern auf ein sicher geschlossenes Netzwerk ein Eingriff zwischen Stellgeräten und deren Kommunikationspartnern ausgeschlossen ist.

Eine individualisierte Nachricht kann auch mithilfe eines sogenannten hybriden Verschlüsselungsverfahrens erzeugt werden, bei dem eine einfache, symmetrische Verschlüsselung des Nachrichteninhalts erfolgt, wobei der symmetrische Schlüssel asymmetrisch verschlüsselt und anschließend kommuniziert wird. Die Verwendung eines asymmetrischen Verschlüsselungsverfahrens verkürzt den Kommunikationsaufwand erheblich, insbesondere bei einer langen Nachricht, deren Dechiffrierung mithilfe eines asymmetrischen Schlüssels sehr aufwendig wäre. Die Sicherheit eines symmetrischen Verschlüsselungsverfahrens, bei dem sowohl dem Sender als auch Empfänger der Schlüssel im Klartext bekannt ist, hängt von der Geheimhaltung dieses Schlüssels ab. Mithilfe eines asymmetrischen Schlüsselaustauschprotokolls können auch über einen unsicheren Kanal Schlüssel sicher übertragen werden, indem der symmetrische Schlüssel selbst mit einem asymmetrischen Verschlüsselungsverfahren verschlüsselt übertragen wird.
- Fig. 1: eine Prinzipskizze eines Systems mit einem Stellgerät und einem Kommunikationspartner, die gemäß eines erfindungsgemäßen Kommunikationsverfahrens Daten austauschen.
- Fig. 2: eine Funktionsprinzipskizze eines Diagnosesystems mit einem optischen Mikrofon; und
- Fig. 3: eine schematische Darstellung eines erfindungsgemäßen Kommunikationsverfahrens.

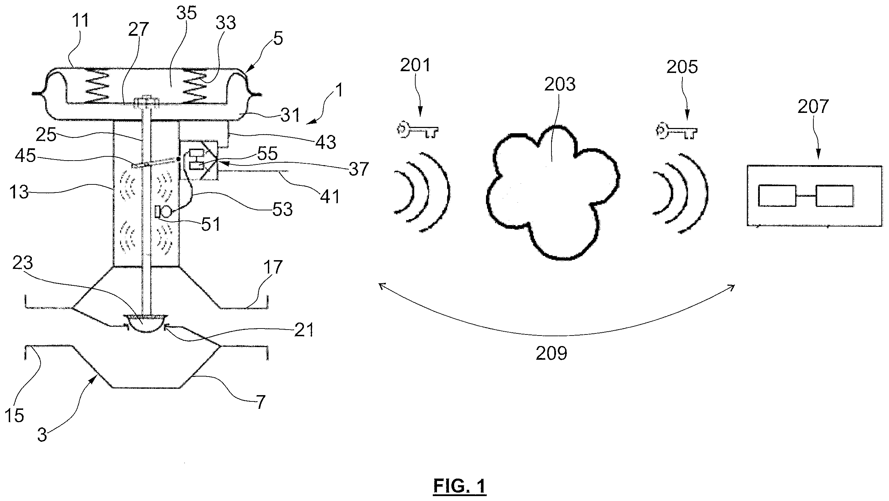

In Fig. 1 ist ein Stellgerät mit einem Diagnosesystem dargestellt, wobei das Stellgerät mit einem Kommunikationspartner Daten austauscht. Das Stellgerät ist in der speziellen Ausführung nach Fig. 1 als ein vollständiges Feldgerät mit der Bezugsziffer 1 realisiert, das ein Stellventil 3 und einem pneumatischen Stellantrieb 5 umfasst, wobei das Stellventilgehäuse 7 mit dem Antriebsgehäuse 11 über ein Joch 13 ortsfest getragen ist.

Das Stellventil 3 ist in einem Rohrsystem einer prozesstechnischen Anlage integriert, wobei der Rohransatz für die Strömungseingangsleitung mit der Bezugsziffer 15 versehen ist und für eine Strömungsausgangsleitung mit der Bezugsziffer 17. Im Inneren des Stellventilgehäuses 7 ist ein Ventilsitz 21 ortsfest an der Innenseite des Stellventilgehäuses 7 befestigt. Der Ventilsitz 21 kooperiert mit einem Ventilglied 23 des Stellventils 7, das über eine Stellstange 25 von dem pneumatischen Stellantrieb 5 betätigt wird. Die Stellstange 13 erstreckt sich durch eine Öffnung im Oberteil des Stellventilgehäuses 7 längs des Joches 13 in eine Durchführung im Stellantriebsgehäuse 11 und ist mit einer der beiden Arbeitskammern 31, 35 des pneumatischen Stellantriebs 5 trennenden Membran 27 fest verbunden.

Der exemplarisch dargestellte Stellantrieb 5 hat eine Arbeitskammer 31 und eine mit Druckfedern 33 belegte Rückstellkammer 35. Die pneumatische Arbeitskammer 31 ist pneumatisch mit einem Stellungsregler 37 verbunden, der an eine Druckluftquelle 41 von etwa 6 bar angeschlossen ist.

Der Stellungsregler 37 hat einen pneumatischen Ausgang, der über eine Ausgangsleitung 43 mit der pneumatischen Arbeitskammer 31 gekoppelt ist. Der Stellungsregler 37 umfasst einen Stellungssensor, der die Position des Ventilglieds 23 über einen Abtastarm 45 erfasst, der drehbeweglich an der Stellstange 25 befestigt ist.

Das Diagnosesystem des Feldgeräts 1 umfasst ein optisches Mikrofon 51, das über ein Datenkabel 53 mit einer Diagnoseeinrichtung 55 gekoppelt ist, die im Inneren des Gehäuses des Stellungsreglers 37 angeordnet ist. Das optische Mikrofon 51 ist innerhalb des Jochs 13 und außerhalb des Stellventilgehäuses 7 und des Stellantriebsgehäuses 11 angeordnet und liegt benachbart dem Stellungsregler 37. Es sei klar, dass das optische Mikrofon 51 auch innerhalb des Stellventilgehäuses 7 und/oder des Stellantriebsgehäuses 11 angeordnet sein kann, wobei das optische Mikrofon 51 entweder dem Prozessmedium, das durch die Strömungsleitung der prozesstechnischen Anlage fließt, einem Mediumsdruck oder innerhalb der pneumatischen Arbeitskammer dem erhöhten Luftdruck ausgesetzt sein kann. Die Leitung 53 kann als Lichtwellenleiter 67 des optischen Mikrofons 51 ausgebildet sein, wobei eine Lichtquelle 63 im Stellungsreglergehäuse 37 untergebracht ist und über den Lichtwellenleiter 67 mit einem Messkopf 71 des optischen Mikrofons 51 optisch gekoppelt ist.

Die Diagnoseeinrichtung 55 kann ein Mikrorechner aufweisen, der die Messsignale des optischen Mikrofons 51 empfängt und bearbeitet, insbesondere bewertet. Der Mikrorechner kann mit einer Sendevorrichtung versehen sein, der die Diagnoseergebnisse bzw. die Auswertergebnisse einer Leitwarte oder einen Empfänger weiterleitet, welcher eine Diagnose vervollständigt oder die Diagnoseergebnisse anzeigen kann. Der Mikrorechner in dem Stellungsregler 37 kann mit einem Speicher gekoppelt sein, in dem sowohl die Messsignale des optischen Mikrofons 51 als auch gespeicherte Vergleichswerte, insbesondere Erfahrungswerte, abgelegt sind, um die gewünschte Diagnose zu stellen.

Ausgehend von dem Stellgerät 1 können gemäß einer stellgeräteindividuellen Kennung des Stellgeräts 1 individualisierte Nachrichten an einen Kommunikationspartner 207, wie eine Leitwarte oder einen entfernten Benutzer, übermittelt werden. Die Kommunikation kann beispielsweise gemäß dem unten beschriebenen Verfahren 500 erfolgen. Beispielsweise kann von dem Stellgerät 1 ein öffentlicher Schlüssel über einen ersten Übertragungspfad oder Kommunikationspfad 201 an einen Cloud-Speicher 203 oder einen Zertifikatsserver übermittelt werden. Der öffentliche Schlüssel des Stellgeräts 1 kann von dem Cloud-Speicher 203 oder Zertifikatsserver über einen zweiten Kommunikationspfad 205, beispielsweise per Funk, Internet, Fieldbus-System, HART-System oder dergleichen, dem Kommunikationspartner 207 oder mehreren Kommunikationspartnern des Stellgeräts 1 übermittelt werden. Über dieselben Kommunikationspfade 205, 201 kann auch in umgekehrter Richtung eine Übermittlung eines öffentlichen Schlüssels des Kommunikationspartners 207 an das Stellgerät 1 erfolgen. Derselbe Kommunikationspfad oder ein anderer Kommunikationspfad 209, der unidirektional oder bidirektional sein kann, kann eine Kommunikation mittels vorzugsweise stellgeräteindividuelle verschlüsselte Nachricht zwischen dem Stellgerät 1 und dem Kommunikationspartner 207, insbesondere von dem Stellgerät 1 zu dem Kommunikationspartner 207, erfolgen. Ein solcher direkter Kommunikationspfad 209 könnte alternativ genutzt werden für die Übermittlung des oder der öffentlichen Schlüssel.

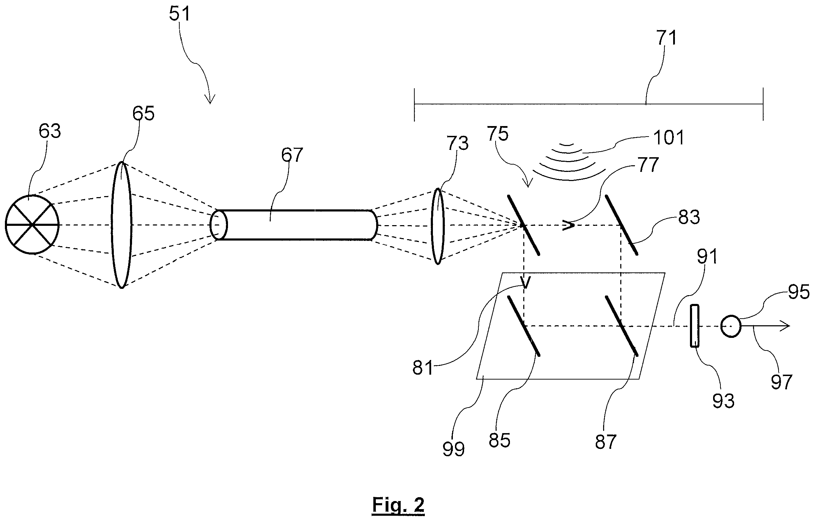

In Fig. 2 ist der prinzipielle Aufbau des optischen Mikrofons 51 dargestellt, der für das Diagnosesystem des Feldgeräts 1 eingesetzt werden soll. Als Hauptbestandteile umfasst das optische Mikrofon 51 eine Lichtquelle 63, die als Laserdiode ausgeführt sein kann, und einen Messkopf 71, der im Stellantriebsgehäuse 11, Stellventilgehäuse 7 oder in einem von Prozessfluid durchströmten Bereich angeordnet sein kann. Lichtstrahlen der Lichtquelle 63 werden an der Eingangslinse 65, die für das optische Mikrofon 51 nicht notwendig ist, gebündelt, um in einen Lichtwellenleiter 67 konzentriert zu werden, der beispielsweise als flexible Glasfaserleitung ausgeführt sein kann. Mit dem Einsatz des Lichtwellenleiters 67 kann eine größere Distanz zwischen der geschützt unterzubringenden Lichtquelle 63 und dem nahe dem Schallfeld zu positionierenden Messkopf überbrückt werden, der im Allgemeinen mit der Bezugsziffer 71 versehen ist. Der Messkopf 71 umfasst eine zweite Linse 73, welche die von dem Lichtwellenleiter 67 austretenden Lichtstrahlen bündelt und einen Strahlenteiler 75 im Brennpunkt zuführt, der die gebündelten Lichtstrahlen in einen ersten Teilstrahl 77 und in einen zweiten Teilstrahl 81 unterteilt. Der erste Teilstrahl 77 ist einem ersten Spiegel 83 zugeordnet. Der zweite Teilstrahl 81 ist einem zweiten Spiegel 85 zugeordnet, wobei beide Spiegel 83, 85 den jeweiligen Teilstrahl 77, 81 auf einen weiteren Strahlenteiler 87 umlenken. Der weitere Strahlenteiler 87 vereinigt die Teilstrahlen 77, 81, um eine Interferenzanordnung 91 hervorzurufen, die über einen Schirm 93 einer Photodiode 95 zugeordnet wird, die entsprechend der erfassten Interferenzstärke ein elektrisches Messsignal 97 abgibt.

Der zweite Strahlenteiler 87 zum Ermöglichen der Interferenzbetrachtung sowie der zweite Spiegel 85 sind in einem schallgeschützten Umfeld, wie einem Gehäuse 99, untergebracht, während der erste Teilstrahl 77 Schallwellen 101 des akustischen Betriebssignals ausgesetzt ist. Anhand der Interferenz 91 der Strahler 77, 81 kann festgestellt werden, ob ein akustisches Betriebssignal 101 vorliegt und wie es charakterisiert ist, wodurch präzise Rückschlüsse auf Funktionsfähigkeit/Schaden des Stellventils 3 der prozesstechnischen Anlage getroffen werden können.

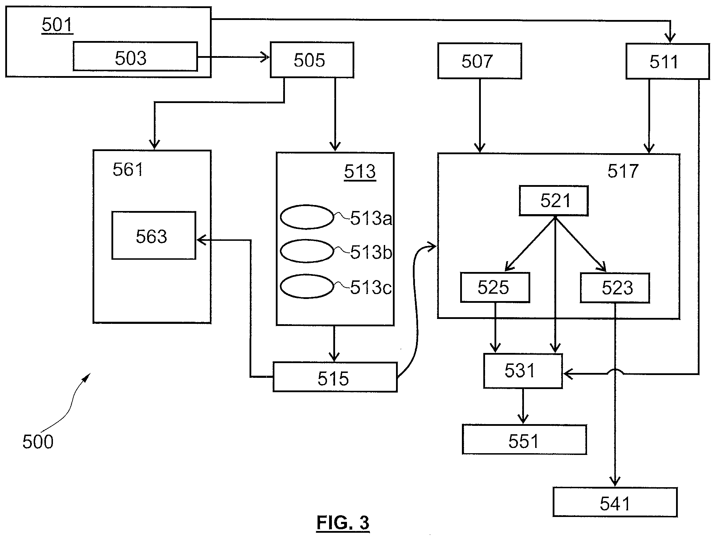

In Fig. 3 ist eine bevorzugte Ausführung eines erfindungsgemäßen Kommunikationsverfahrens im Allgemeinen mit dem Bezugszeichen 500 bezeichnet. Während des Stellbetriebs 501 des Stellgeräts, beispielsweise eines Feldgeräts 1 mit einem Stellventil 3 oder eines (nicht näher dargestellten) Feldgeräts mit einer Pumpe, werden Schallemissionen abgegeben 503.

Bei dem Kommunikationsverfahren 500 werden die Schallemissionen des Stellgerätes erfasst 505, beispielsweise mit einem oben beschriebenen Diagnosesystem mit einem optischen Mikrofon 51. Bevorzugt werden auch Zeitwerte erfasst 507 sowie Betriebsdaten 511 bezüglich des Stellbetriebs 501. Vorzugsweise werden erfasste Schallwerte 505 und erfasste Betriebsdaten 511 anhand der Zeiterfassung 507 einander zugeordnet.

Bei einer bevorzugten Ausführung eines Kommunikationsverfahrens 500 durchlaufen die erfassten Schallmesswerte eine Filterung 513. Die Filterung 513 kann ein Herausfiltern von Umgebungswerten 513a, ein Herausfiltern von alterungsbedingten Messfehlern 513b und/oder eine Filterung von sonstigen Fehlern 513c umfassen. Durch die Filterung 513 der zuvor im Schritt 505 erfassten Schallmesswerte können stabile Schallparameter ermittelt werden 515.

Vorzugsweise können stabile Schallparameterwerte, die gemäß dem Schritt 515 ermittelt wurden, einem Definitionsvorgang 517 zum Bestimmen einer stellgerätindividuellen Kennung zugrunde gelegt werden.

Im Rahmen des Definitionsvorgangs 517 zum Bestimmen der stellgeräteindividuellen Kennung wird auf Basis der zuvor im Schritt 505 erfassten Schallmesswerte, die im Schritt 513 eine Filterung durchlaufen haben, um im Schritt 515 stabile Schallparameter festzulegen, ein stellgeräteindividueller Schlüsselwert, beispielsweise ein private key, in Schritt 521 erzeugt. Mithilfe des privaten Schlüssels kann im Schritt 525 das Erzeugen einer digitalen Signatur erfolgen. Auf Basis des privaten Schlüssels kann alternativ oder zusätzlich in einem Schritt 523 ein stellgeräteindividueller öffentlicher Schlüssel oder public key erzeugt werden.

Nachdem in Schritt 517 eine stellgerätindividuelle Kennung definiert wurde, was beispielsweise anhand vorbestimmter erfasster Betriebsdaten gemäß Schritt 511 oder anhand von den im Schritt 507 erfassten Zeitdaten ausgelöst sein, kann zu einem späteren Zeitpunkt eine dem Stellgerät spezifisch zugeordnete und reproduzierbar zu offenbarene individualisierte Nachricht im Schritt 513 erzeugt werden. Das Erzeugen einer individualisierten Nachricht gemäß Schritt 531 umfasst zumindest das Einarbeiten einer zuvor erzeugten stellgerätespezifischen Stellgerätsignatur 525 und/oder das mithilfe des zuvor (Schritt 521) definierten privaten Schlüssels sowie gegebenenfalls eines öffentlichen Schlüssels (Schritt 523) eines Kommunikationspartners vollzogene Verschlüsseln des Nachrichteninhalts. Der Inhalt der signierten und/oder verschlüsselte Nachricht, kann basieren auf zuvor im Schritt 511 erfassten Betriebsdaten, zuvor im Schritt 505 erfassten Schallemissionen und/oder im Schritt 515 definierten stabilen Schallparametern.

Der öffentliche Schlüssel des Stellgeräts wird gemäß einem Übertragungsschritts 541 an einen Kommunikationspartner des Stellgeräts übermittelt. Die Übertragung des öffentlichen Schlüssels oder public keys kann beispielsweise über einen Zertifikatsserver oder einen Cloud-Speicher erfolgen.

Die im Schritt 531 erzeugte individualisierte Nachricht wird in einem Schritt 551 an den Kommunikationspartner gesendet. Anhand des zuvor übertragenen öffentlichen Schlüssels gemäß Schritt 541 kann der Kommunikationspartner die in Schritt 551 übersandte Nachricht entschlüsseln und/oder die Signatur authentifizieren.

Gemäß einer besonderen Ausführung eines erfindungsgemäßen Kommunikationsverfahrens können die in Schritt 505 erfassten Schallwerte, die in Schritt 511 erfassten Betriebsdaten und/oder die durch die Filterung 513 in Schritt 515 definierten stabilen Schallparameter einem Diagnoseverfahren 561 unterzogen werden, um zu ermitteln, ob das Stellgerät ordnungsgemäß funktioniert. Das Diagnoseverfahren 561 kann beispielsweise den Vergleich der zuvor in Schritt 515 bestimmten stabilen Schallparametern mit zuvor bestimmten Differenzwert gemäß Schritt 563 umfassen.

Die in der Diagnose 561 berücksichtigten Schall- und/oder Betriebsdaten-Messwert können beispielsweise mittels einer individualisierten Nachricht zur Diagnose des Stellgeräts von dem Stellgerät per individualisierter Nachricht an den Kommunikationspartner übermittelt worden sein. Es ist auch denkbar, dass das Stellgerät eine Diagnosefunktion gemäß dem Verfahren 568 durchführt und das Ergebnis des Diagnoseverfahrens in einer individualisierten Nachricht konvertiert 531, um diese an einen Kommunikationspartner zu senden.

Die in der vorstehenden Beschreibung, den Figuren und den Ansprüchen offenbarten Merkmale können sowohl einzeln als auch in Kombination für die Realisierung der Erfindung, die durch folgende Ansprüche definiert wird, in den verschiedenen Ausgestaltungen von Bedeutung sein.

### Bezugszeichenliste

- 1: Stellgerät
- 3: Stellventil
- 5: Stellantrieb
- 7: Stellventilgehäuse
- 11: Stellantriebsgehäuse
- 13: Joch
- 15: Strömungseinleitung
- 17: Strömungsausgangsleitung
- 21: Ventilsitz
- 23: Ventilglied
- 25: Stellstange
- 27: Membran
- 31: Arbeitskammer
- 33: Druckfeder
- 35: Rückstellkammer
- 37: Stellungsregler
- 41: Druckluftquelle
- 43: Ausgangsleitung
- 45: Abtastarm
- 51: optisches Mikrofon
- 53: Leitung/Kabel/Lichtwellenleiter
- 55: Diagnoseeinrichtung
- 63: Lichtquelle
- 65: Eingangslinse
- 67: Lichtwellenleiter
- 71: Messkopf
- 73: Linse
- 75: erster Strahlenteiler
- 77: erster Teilstrahl
- 81: zweiter Teilstrahl
- 83: erster Spiegel
- 85: zweiter Spiegel
- 87: zweiter Strahlenteiler
- 91: Interferenz
- 93: Schirm
- 95: Photodiode
- 97: elektrisches Messsignal
- 99: Gehäuse
- 101: Schallwellen/Schallfeld
- 201: erster Übertragungs- oder Kommunikationspfad
- 203: Cloud-Speicher/Zertifikatsserver
- 205: zweiter Kommunikationspfad
- 207: Kommunikationspartner
- 209: direkter Kommunikationspfad
- 500: Kommunikationsverfahren
- 501: Stellbetrieb
- 503: Schallemission
- 505: Schallwertmessung
- 507: Zeiterfassung
- 511: Betriebsdatenerfassung
- 513: Filterung
- 513a: Herausfiltern von Umgebungswerten
- 513b: Herausfiltern von alterungsbedingten Messfehlern
- 513c: Herausfiltern von sonstigen Fehlern
- 515: stabile Schallparameter ermitteln
- 517: Definitionsvorgang
- 521: Schlüsselerzeugung
- 523: öffentlicher Schlüssel generieren
- 525: stellgerätespezifische Stellgerätsignatur generieren
- 531: Erzeugen einer individualisierten Nachricht
- 541: Übertragung des öffentlichen Schlüssels
- 551: übersandte Nachricht
- 561: Diagnoseverfahren
- 563: Differenzwerte
- 568: Diagnosefunktion

## Patentansprüche

1. Kommunikationsverfahren für ein Stellgerät (1) einer prozesstechnischen Anlage, wobei
- von dem Stellgerät (1) akustische Emissionen (101) erzeugt werden;
- die akustischen Emissionen (101) des Stellgeräts (1) erfasst werden; und
- eine stellgeräteindividuelle Kennung definiert wird, wobei das Definieren der Kennung auf Basis der erfassten akustischen Emissionen (101) erfolgt, **dadurch gekennzeichnet, dass** das Definieren der Kennung das Erzeugen eines privaten Schlüssels auf Basis der erfassten akustischen Emissionen (101) umfasst.

2. Verfahren nach Anspruch 1, wobei das Erfassen der akustischen Emissionen (101) umfasst, dass eine zeitabhängige Schar von Emissionsmesswerten, wie ein insbesondere Fourier-transformiertes Frequenzspektrum oder eine Reihe von Zeit-Emissionsmesswert-Paaren, bestimmt wird.

3. Verfahren nach Anspruch 1 oder 2, wobei wenigstens eine Filterfunktion durchgeführt wird, um aus den erfassten akustischen Emissionen (101) unter Herausfiltern von Einflüssen durch Umgebungsgeräusche, alterungsbedingte Geräusche und/oder Fehlergeräusche, stabile stellgeräteindividuelle Schallparameter zu bestimmen.

4. Verfahren nach einem der vorstehenden Ansprüche, wobei das Definieren der Kennung ferner das Erzeugen einer digitalen Signatur zum Identifizieren des Stellgeräts (1) auf Basis des privaten Schlüssels umfasst.

5. Verfahren nach Anspruch 4, ferner umfassend das Erzeugen eines öffentlichen Schlüssels auf Basis des privaten Schlüssels, vorzugsweise ferner umfassend, dass der öffentliche Schlüssel an einen Kommunikationspartner (207), wie ein Nutzer, insbesondere mittels eines öffentlichen Datenspeichers (203), wie einem Zertifikatserver oder einem Cloud-Speicher, übermittelt wird, wobei insbesondere der Kommunikationspartner (207) dem Stellgerät (1) seinen öffentlichen Schlüssel übermittelt.

6. Verfahren nach einem der Ansprüche 4 oder 5, wobei das Definieren der Kennung sowie gegebenenfalls das Erzeugen des öffentlichen Schlüssels insbesondere während des Betriebs des Stellungsreglers (37) infolge eines vorbestimmten Auslösers durgeführt wird, wobei insbesondere der vorbestimmte Auslöser ein Zeitabstand, ein Zeitpunkt und/oder ein bestimmter Betriebszustand ist.

7. Verfahren nach einem der Ansprüche 5 oder 6, wobei das Stellgerät (1) eine individualisierte, beispielsweise mittels des privaten Schlüssels, sowie gegebenenfalls dem öffentlichen Schlüssel des Kommunikationspartners (207), verschlüsselte und/oder mittels der digitalen Signatur signierte, Nachricht erzeugt, und wobei das Stellgerät (1) die individualisierte Nachricht an einen Kommunikationspartner (207) versendet, wobei insbesondere der Kommunikationspartner (207) von dem Stellgerät (1) die individualisierte Nachricht erhält und mittels des öffentlichen Schlüssels des Stellgeräts (1) authentifiziert und/oder entschlüsselt.

8. Verfahren nach einem der Ansprüche 3 bis 7, wobei das Stellgerät (1) einem Kommunikationspartner (207) eine gegebenenfalls individualisierte Nachricht sendet, die die stabilen stellgeräteindividuellen Schallparameter enthält.

9. Verfahren nach einem der Ansprüche 3 bis 8, wobei die stabilen stellgeräteindividuellen Schallparameter mit vorbestimmten Referenzwerten, insbesondere Schallspektren, verglichen werden.

10. Verfahren nach einem der Ansprüche 1 bis 9, wobei auf Basis der erfassten akustischen Emissionen (101) eine Diagnosefunktion, insbesondere durch das Stellgerät (1) oder den Kommunikationspartner (207), durchgeführt wird.

11. Verfahren nach einem der vorstehenden Ansprüche bei dem die Erfassung der akustischen Emissionen (101) mit einem optischen Mikrofon (51) erfolgt, wobei insbesondere das optische Mikrofon (51) auf ein Strukturelement des Stellgeräts (1) gerichtet ist und ein akustisches, stellgerätespezifisches Betriebssignal mittels elektromagnetischer Strahlung misst, die durch das akustische, stellgerätespezifische Betriebssignal beeinflusst ist.

## Claims

1. Communication method for an actuator (1) of a process plant, wherein
- acoustic emissions (101) are generated by the actuator (1);
- the acoustic emissions (101) of the actuator (1) are detected; and
- an actuator-individual identifier is defined, wherein defining the identifier is carried out based on the detected acoustic emissions (101), **characterized in that** defining the identifier comprises generating a private key based on the detected acoustic emissions (101).

2. Method according to claim 1, wherein detecting the acoustic emissions (101) comprises that a time-dependent array of emission measurement values, such as a particularly Fourier-transformed frequency spectrum or a series of time emission measurement value pairs, is detected.

3. Method according to claim 1 or 2, wherein at least one filter function is performed to determine stable actuator-individual sound parameters from the detected acoustic emissions (101) while filtering out influences due to ambient noises, aging-related noises and/or error noises.

4. Method according to one of the preceding claims, wherein defining the identifier further comprises generating a digital signature for identifying the actuator (1) based on the private key.

5. Method according to claim 4, further comprising generating a public key based on the private key, preferably further comprising that the public key is transmitted to a communication partner (207), such as a user, in particular by means of a public data storage (203), such as a certificate server or a cloud storage, wherein in particular the communications partner (207) transmits to the actuator (1) its public key.

6. Method according to one of claims 4 or 5, wherein defining the identifier as well as, if applicable, generating the public key is performed, in particular during the operation of the positioner (37), as a result of a predetermined trigger, wherein in particular the predetermined trigger is a time interval, a point in time and/or a specific operating state.

7. Method according to one of claims 5 or 6, wherein the actuator (1) generates an individualized message, for example encrypted by means of the private key, as well as, if applicable, the public key of the communication partner (207) and/or signed by means of the digital signature, and wherein the actuator (1) sends the individualized message to a communication partner (207), wherein in particular the communication partner (207) receives the individualized message from the actuator (1) und authenticates and/or decrypts it by means of the public key of the actuator (1).

8. Method according to one of claims 3 to 7, wherein the actuator (1) sends an optionally individualized message to a communication partner (207) that comprises the stable actuator-individual sound parameters.

9. Method according to one of claims 3 to 8, wherein the stable actuator-individual sound parameters are compared with predetermined reference values, in particular sound spectra.

10. Method according to one of claims 1 to 9, wherein a diagnostic function is performed on the basis of the detected acoustic emissions (101), in particular by the actuator (1) or the communication partner (207).

11. Method according to one of the preceding claims, in which detecting the acoustic emissions (101) is carried out with an optical microphone (51), wherein in particular the optical microphone (51) is directed at a structural element of the actuator (1) and measures an acoustic, actuator specific operating signal by means of electromagnetic radiation which is influenced by the acoustic, actuator specific operating signal.

## Revendications

1. Procédé de communication pour un dispositif de réglage (1) d'une installation technique de procédé,
- des émissions (101) acoustiques étant générées par le dispositif de réglage (1) ;
- les émissions (101) acoustiques étant détectées par le dispositif de réglage (1) ; et
- un identifiant propre au dispositif de réglage étant défini, la définition de l'identifiant s'effectuant sur la base des émissions (101) acoustiques détectées,
**caractérisé en ce que** la définition de l'identifiant comprend la génération d'une clé privée sur la base des émissions (101) acoustiques détectées.

2. Procédé selon la revendication 1, la détection des émissions (101) acoustiques comprenant qu'une multitude de valeur de mesure des émissions soit déterminée en fonction du temps, comme un spectre de fréquences ayant notamment subi une transformation de Fourier ou une série de paires de valeurs de mesure des émissions dans le temps.

3. Procédé selon la revendication 1 ou 2, au moins une fonction de filtrage étant réalisée, pour déterminer à partir des émissions acoustiques (101) détectées, en extrayant par filtrage des influences par des bruits ambiants, des bruits dus au vieillissement et / ou des bruits dus à un dysfonctionnement des paramètres de puissance sonore stables, propres au dispositif de réglage.

4. Procédé selon l'une quelconque des revendications précédentes, la définition de l'identifiant comprenant par ailleurs la génération d'une signature numérique, pour identifier le dispositif de réglage (1) sur la base de la clé privée.

5. Procédé selon la revendication 4, comprenant par ailleurs la génération d'une clé publique sur la base de la clé privée, comprenant par ailleurs de préférence que la clé publique soit transmise à un partenaire de communication (207), comme un utilisateur, notamment au moyen d'une mémoire de données (203) publique, comme un serveur de certificats ou une stockage en nuage, notamment le partenaire de communication (207) transmettant sa clé publique au dispositif de réglage (1) .

6. Procédé selon l'une quelconque des revendications 4 ou 5, la définition de l'identifiant, ainsi que le cas échéant la génération de la clé publique étant réalisée notamment en cours de fonctionnement du régulateur de position (37), en réponse à un déclencheur prédéfini, notamment le déclencheur prédéfini étant un intervalle de temps, un moment et / ou un état de service défini.

7. Procédé selon l'une quelconque des revendications 5 ou 6, le dispositif de réglage (1) générant un message personnalisé, par exemple crypté au moyen de la clé privée, ainsi que le cas échéant de la clé publique du partenaire de communication (207) et /ou signé au moyen de la signature numérique et le dispositif de réglage (1) envoyant le message personnalisé à un partenaire de communication (207), notamment le partenaire de communication (207) recevant le message personnalisé de la part du dispositif de réglage (1) et l'authentifiant et / ou le décryptant au moyen de la clé publique du dispositif de réglage (1).

8. Procédé selon l'une quelconque des revendications 3 à 7, le dispositif de réglage (1) envoyant à un partenaire de communication (207) un message personnalisé le cas échéant, qui contient les paramètres de puissance sonore stables, propres au dispositif de réglage.

9. Procédé selon l'une quelconque des revendications 3 à 8, les paramètres de puissance sonore stables, propres au dispositif de réglage étant comparés à des valeurs de référence prédéfinies, notamment des spectres de puissance sonore.

10. Procédé selon l'une quelconque des revendications 1 à 9, sur la base des émissions acoustiques (101) détectées, une fonction de diagnostic étant réalisée notamment par le dispositif de réglage (1) ou le partenaire de communication (207).

11. Procédé selon l'une quelconque des revendications précédentes, lors duquel la détection des émissions acoustiques (101) s'effectue à l'aide d'un microphone (51) optique, notamment le microphone (51) optique étant orienté vers un élément de structure du dispositif de réglage (1) et mesurant un signal de service acoustique, spécifique au dispositif de réglage au moyen d'un rayonnement électromagnétique, qui est influencé par le signal de service acoustique, spécifique au dispositif de mesure.
